# EUROPÄISCHE PATENTSCHRIFT

(11) **EP 3 601 078 B1**
(45) Veröffentlichungstag und Bekanntmachung des Hinweises auf die Patenterteilung: **01.05.2024**
(21) Anmeldenummer: 18709536.9
(22) Anmeldetag: 06.03.2018
(51) Int. Cl.: B65D 23/00, B29C 49/08

(54) **STANDMANSCHETTE FÜR EINEN INNENDRUCKBESTÄNDIGEN KUNSTSTOFFBEHÄLTER**
STAND SLEEVE FOR A PLASTIC CONTAINER CAPABLE OF WITHSTANDING INTERNAL PRESSURE
MANCHON D'APPUI AU SOL POUR UN CONTENANT EN MATIÈRE PLASTIQUE RÉSISTANT À LA PRESSION INTÉRIEURE

(30) Priorität: 23.03.2017 CH 3822017
(43) Veröffentlichungstag der Anmeldung: 05.02.2020
(73) Patentinhaber: Alpla Werke Alwin Lehner GmbH & Co. KG, 6971 Hard (AT)
(72) Erfinder: SIEGL, Robert, 6850 Dornbirn (AT)
(74) Vertreter: Bohest AG Branch Ostschweiz
(86) Internationale Anmeldenummer: PCT/EP2018/055389
(87) Internationale Veröffentlichungsnummer: WO 2018/172052

(56) Entgegenhaltungen:
- EP-A1- 1 126 433
- WO-A1-2014/053212
- JP-A- H05 246 435
- US-A- 3 726 429
- US-A- 4 082 200
- US-A- 4 367 820
- US-A- 4 609 418

## Beschreibung

Die Erfindung betrifft eine Standmanschette für einen innendruckbeständigen Kunststoffbehälter, insbesondere für einen Kunststoff-Aerosolbehälter, gemäss dem Oberbegriff des Patentanspruchs 1. Die Erfindung betrifft auch ein mit einer Standmanschette ausgestattetes Aerosolgebinde.

Aerosolbehälter werden üblicherweise aus Metall, insbesondere aus Weissblech oder aus Aluminium, hergestellt. Vereinzelt finden sich auch Aerosolbehälter aus Glas auf dem Markt. Damit soll insbesondere der für derartige Behälter mit einer Verpackungsgrösse über 50 ml geltenden Direktive EC 75/324 der Europäischen Gemeinschaft Rechnung getragen werden. Aerosolbehälter aus Metall haben den Nachteil, dass sie mit der Zeit korrodieren können. Auch besteht bei Metallbehältern eine gewisse Gefahr, dass diese Oberflächen, mit denen sie in Kontakt kommen, zerkratzen können. Aerosolbehälter aus Glas wiederum haben den Nachteil, dass sie bei unsachgemässer Handhabung, beispielweise im Fall eines Sturzes zu Boden, brechen können.

Es besteht daher schon länger Interesse daran, Aerosolbehälter als Kunststoffbehälter auszubilden. Mehrere Gründe sprechen für den Ersatz der bekannten metallischen Aerosoldruckbehälter durch Aerosolbehälter aus Kunststoff. Die Kunststoffbehälter sind in der Regel leichter als Aerosolbehälter aus Metall, beispielsweise aus Weissblech oder Aluminium. Die Kunststoffbehälter sind üblicherweise auch kostengünstiger herstellbar als Aerosolbehälter aus Metall. Aerosolbehälter aus Kunststoff können beispielsweise auch transparent ausgebildet werden. Allerdings ist der Ersatz der bekannten Aerosolbehälter aus Metall durch solche aus Kunststoff nicht trivial, da Aerosoldruckbehälter in der Regel deutlich höheren Innendrücken standhalten müssen, als dies beispielsweise bei Kunststoffflaschen für karbonisierte Softdrinks der Fall ist. Während bei Softdrinkflaschen typischerweise Innendrücke von 2 bar bis 4 bar verwendet werden, müssen Aerosolbehälter aus Kunststoff Innendrücken von 5 bar bis 15 bar bei Raumtemperatur standhalten, bzw. bei Erwärmung sogar Innendrücken von bis zu 40 bar. Aerosolbehälter aus Kunststoff müssen gegenüber dem eingesetzten Treibgas chemisch stabil sein. Damit der Boden des Aerosolbehälters diesen erhöhten Drücken standhalten kann, ist dieser kuppelförmig konvex nach aussen gewölbt. Aus Gründen der besseren Druckverteilung wird die Form des Behälterbodens dabei möglichst derjenigen eines Kugelabschnitts angenähert. Der konvexe Behälterboden hat jedoch den Nachteil, dass der Kunststoff-Aerosolbehälter nicht mehr auf recht auf einer ebenen Fläche abgestellt werden kann.

Um trotz des konvexen Behälterbodens ein aufrechtes Stehen des Kunststoff-Aerosolbehälters zu ermöglichen, ist im Stand der Technik vorgeschlagen, den konvex ausgebildeten Behälterboden mit einer Standmanschette zu versehen. Eine derartige Standmanschette ist meist becherartig ausgebildet und weist einen Manschettenboden und einen zylindrischen Mantel auf. Die Standmanschette ist beispielsweise durch Verkleben mit dem Kunststoff-Aerosolbehälter verbunden. Das Verkleben der Standmanschette mit dem Aerosolbehälter erfordert bei der Herstellung eines Aerosolgebindes einen zusätzlichen Arbeitsschritt. Die Klebeverbindung zwischen der Standmanschette und dem Aerosolbehälter erschwert oder behindert sogar das Recycling des Aerosolbehälters und der Standmanschette nach dem Entleeren des Aerosolgebindes. Als Alternative ist daher bereits vorgeschlagen worden, die Standmanschette und den Aerosolbehälter formschlüssig miteinander zu verbinden. Dazu ist die Standmanschette mit Vorsprüngen oder dergleichen ausgestattet, die in korrespondierende Aussparungen oder Nuten am Aerosolbehälter eingreifen. Die formschlüssige Verbindung zwischen der Standmanschette und dem Aerosolbehälter erfordert eine hohe Präzision bei der Herstellung der beiden Bauteile. Dabei muss der Schwund beim Abkühlen des geblasenen Kunststoff-Aerosolbehälters ebenso berücksichtigt werden wie der Schwund beim Abkühlen der spritzgegossenen Standmanschette. Auch muss berücksichtigt werden, dass sich der Aerosolbehälter unter Innendruck in einem gewissen Umfang ausdehnen kann, was das formschlüssige Eingreifen der Vorsprünge in die Aussparungen oder Nuten beeinträchtigen kann. Weiters kann es erforderlich sein, bei der Montage die Standmanschette und den Aerosolbehälter für die Erstellung der formschlüssigen Verbindung exakt zueinander auszurichten. Dies erschwert und verteuert die Herstellung des Aerosolbehälters mit Standmanschette.

Die Standmanschette ist eine Spritzgiessteil, das üblicherweise keine besonders grosse Eigensteifigkeit aufweist. Falls der mit der Standmanschette versehene Aerosolbehälter unbeabsichtigt zu Boden fällt, kann es zu einer Verformung oder gar Beschädigung der Standmanschette kommen, was dazu führen kann, dass diese sich vom Aerosolbehälter löst. Dann kann aber der Aerosolbehälter nicht mehr in aufrechter Lage abgestellt werden.

JPH05246435 offenbart eine Standmanschette gemäß dem Oberbegriff des Anspruchs 1.

Aufgabe der vorliegenden Erfindung ist es daher, den zuvor geschilderten Nachteilen des Stands der Technik abzuhelfen. Es soll eine Standmanschette für einen innendruckbeständigen Kunststoffbehälter geschaffen werden, die einfach montierbar ist und sicher am Aerosolbehälter haftet.

Die Lösung der geschilderten und noch weiterer Aufgaben besteht in einer Standmanschette für einen innendruckbeständigen Kunststoffbehälter, insbesondere für einen Kunststoff Aerosolbehälter, welche wenigstens die im Patentanspruch 1 angeführten Merkmale aufweist. Weiterbildungen und/oder vorteilhafte Ausführungsvarianten der Erfindung sind Gegenstand der abhängigen Patentansprüche.

Eine Standmanschette für einen innendruckbeständigen Kunststoffbehälter, insbesondere für einen Kunststoff-Aerosolbehälter, weist ein eine Standfläche aufweisendes Bodenteil und einen in Umfangsrichtung geschlossenen Mantel auf. Das Bodenteil und der Mantel sind einstückig miteinander ausgebildet und sind in einem Streckblasverfahren hergestellt. Der Mantel der Standmanschette ist für eine kraftschlüssige Verbindung mit einer Aussenwandung in Bodennähe des innendruckbeständigen Kunststoffbehälters ausgebildet. Die erfindungsgemässe Standmanschette ist im Gegensatz zu den Spritzgiessteilen des Stands der Technik ein streckgeblasenes Bauteil. Beim Streckblasen wird die Standmanschette biaxial verstreckt. Dadurch weist sie eine deutlich grössere Festigkeit, Schlagzähigkeit und Eigensteifigkeit auf als die spritzgegossenen Standmanschetten des Stands der Technik. Während der Kunststoffspritzguss durch ein frühzeitiges Abfrieren in der Regel kein dünne Wandstärken zu lassen, können durch das Streckblasen viel dünnere Strukturen gefertigt werden. Beispielsweise ist das Verhältnis von Fließlänge zu Wandstärke für recyclingfähiges Poyethylenterephtalat (PET) im Kunststoffspritzguss etwa 50, während sich im Streckblasverfahren Verhältnisse größer 150 realisieren lassen. Damit kann die Wandstärke eines im Streckblasverfahren hergestellten Produkts um mindestens den Faktor 3 gegenüber einem im Spritzguss hergestellten Produkts verringert werden. Infolge der grösseren Sclagzähigkeit der Standmanschette ist die Gefahr einer Verformung oder gar Beschädigung und einer damit einhergehenden Splitterbildung bei einem Fall zu Boden deutlich verringert. Die Gefahr, dass sich eine an einem innendruckbeständigen Kunststoffbehälter, insbesondere an einem Kunststoff-Aerosolbehälter, montierte Standmanschette vom Kunststoffbehälter löst, kann dadurch deutlich reduziert werden. Vielmehr kann die Standmanschette derart ausgelegt sein, dass sie, wenn sie an einem innendruckbeständigen Kunststoffbehälter montiert ist, auch einen unbeabsichtigen Fall zu Boden überstehen kann. Die Standmanschette ist für eine klebstofffreie und formschlussfreie, rein kraftschlüssige Verbindung mit dem Kunststoffbehälter ausgebildet, und ist dadurch sehr einfach einem Recycling zugängig. Indem die erfindungsgemässe Standmanschette für eine kraftschlüssige Verbindung mit einem Kunststoffbehälter ausgebildet ist, kann sie ohne Eingreiforgane oder dergleichen ausgebildet sein. Dadurch kann die Standmanschette einfach und kostengünstig hergestellt werden. Ebenso können die bei den formschlüssig montierbaren Standmanschetten des Stands der Technik am innendruckbeständigen Kunststoffbehälter erforderlichen Vertiefungen oder Nuten, in denen die Eingreiforgane oder dergleichen am Mantel der Standmanschette verriegeln, entfallen. Dadurch kann auch der innendruckbeständige Kunststoffbehälter einfach und kostengünstig hergestellt werden. Das Bodenteil und der Mantel der Standmanschette sind einstückig miteinander ausgebildet, wodurch eine separate Montage, beispielsweise ein Verkleben, der beiden Teile entfällt. Zudem können das Bodenteil und der Mantel aus dem selben Kunststoffmaterial bestehen, was ebenfalls einen Vorteil für ein Recycling darstellen kann.

In einer Ausführungsvariante der Erfindung kann die Standmanschette in einem Lost-Neck-Verfahren hergestellt sein. Beim Lost-Neck-Verfahren werden überschüssige Abschnitte eines aus einem Preform streckgeblasenen Behältnisses beispielsweise durch Schneiden entfernt, um die Standmanschette zu erhalten. Das Lost-Neck-Verfahren bietet die Möglichkeit, die für die Montage der Standmanschette wesentlichen Abschnitte des Mantels, insbesondere den vom Bodenteil abgewandten Endabschnitt des Mantels, zu kalibrieren, um die für die Montage erforderliche Masshaltigkeit zu gewährleisten. Auch können die überschüssigen Abschnitte in einem Winkel von der Standmanschette getrennt werden, so dass sich am Endteil des Mantels eine Schräge ausbildet, die das Einführen des innendruckbeständigen Kunststoffbehälters in die Standmanschette erleichtert.

Gemäß der Erfindung weist die Standmanschette im Mantel wenigstens eine Dehnungsfalte auf, die sich im wesentlichen in eine axiale Richtung erstreckt.

Durch die Dehnungsfalte kann sich der Mantel der Standmanschette bei ihrer Montage sehr gut an die Aussenabmessungen des Kunststoffbehälters im Montagebereich anpassen, und der Mantel der Standmanschette kann einer allfälligen Ausdehnung des Kunststoffbehälters infolge des Innendrucks in einem vorgebbaren Ausmass folgen, um einen übermässigen Druck auf die Aussenwandung des Kunststoffbehälters im Montagebereich zu verhindern. Die Dehnungsfalten können dabei derart ausgebildet sein, dass sie im gedehnten Zustand praktisch nicht sichtbar sind. Hierbei kann sich die Dehnfalte über die gesamte Höhe des Mantels erstrecken oder nur in dem Teilbereich des Mantels, der den Boden des Kunststoffbehälters kraftschlüssig umfasst.

Eine Ausführungsvariante der Standmanschette kann vorsehen, dass der Mantel zwei oder mehrere Dehnungsfalten aufweist, die in gleichem Winkelabstand voneinander angeordnet sind. Durch das Vorsehen mehrerer Dehnungsfalten kann die einzelne Dehnungsfalte schmaler ausgebildet sein. Die grössere Anzahl von Dehnungsfalten kann eine grössere Anpassung des Mantels der Standmanschette an Umfangsveränderungen des Kunststoffbehälters ermöglichen. Die gleichmässige Verteilung der Dehnungsfalten über den Umfang des Mantels kann die Anpassung des Mantels an den Kunststoffbehälter im Montagebereich verbessern und eine gleichmässige Druckverteilung über den Umfang begünstigen. Jedoch können die Dehnungsfalten auch im ungleichen Winkelabstand voneinander angeordnet sein. Beispielsweise können zwei Dehnfalten nebeneinander angeordnet sein und weitere zwei nebeneinander angeordnete Dehnfalten in einem vorbestimmten Abstand, der größer ist als der Abstand der beiden nebeneinander angeodneten Dehnfalten.

Eine weitere Ausführungsvariante der Standmanschette kann vorsehen, dass das Bodenteil einen Abstützbereich aufweist, der sich von der Standfläche in Richtung der Erstreckung des Mantels nach innen erstreckt und wenigstens eine konzentrisch angeordete Abstützfläche aufweist. Die Abstützfläche unterstützt im montierten Zustand den Behälterboden und kann bei der Montage der Standmanschette am Kunststoffbehälter als eine Montagehilfe dienen. Die Abstützfläche kann als ein umlaufender Kreisring oder auch nur als Segmente oder Sektoren ausgebildet sein, so dass der Behälterboden beispielsweise nur an drei Punkten oder an drei Teilbereichen abgestützt ist. Durch den nach innen ragenden Abstützbereich kann bei der Montage der Standmanschette auch die Aufschublänge auf den Kunststoffbehälter vorbestimmt und dadurch der Kraftschluss begrenzt werden. Beispielsweise kann ein Teilbereich des Abstützbereichs, der die Standfläche mit der Abstützfläche verbindet, S-förmig ausgebidet sein, so dass die Abstützfläche relativ zu der Standfläche reversibel elastisch verformbar ist. Dadurch können im montierten Zustand der Standmanschette Längendehnungen aufgrund Temperatur oder Druck ausgeglichen werden. Ferner kann sich an der wenigstens einen Abstützfläche eine Mulde anschließen, die gegenüber der Aussenwandung des Behälterbodens zurückspringt. Damit kann die Auflage des Behälterbodens auf die wenigstens eine Abstützfläche reduziert werden.

In einer Ausführungsvariante der Standmanschette weist das Bodenteil einen im Wesentlichen mittig angeordneten Rücksprung auf. Dieser Rücksprung kann gewährleisten, dass die Standmanschette nicht mit einem Anspritzpunkt des Kunststoffbehälters in Berührung kommt, der in der Regel über die Außenkontur des Bodens vorsteht. Dieser Rücksprung kann in der Mulde angeordent sein.

In einer Ausführungsvariante der Standmanschette weist das Bodenteil einen im Wesentlichen mittig angeordneten Durchbruch auf. Der Durchbruch kann dazu dienen, dass beispielsweise Flüssigkeit oder Fremdkörper, die in die Standmanschette gelangen, wieder aus dieser austreten können. Beispielsweise kann Flüssigkeit aus dem Kunststoff-Aerosolbehälter an dessen Aussenwandung herablaufen und in die Standmanschette gelangen. Der Durchbruch kann ein Abfliessen der Flüssigkeit ermöglichen.

In einer Ausführungsvariante der Standmanschette ist die Standmanschette, insbesondere der Mantel und das Bodenteil frei von Durchbrüchen. Somit kann der von der Standmanschette umfasste Bereich des innendruckbeständigen Kunststoffbehälters gegen äußere und/oder chemische Einflüsse von außen geschützt sein, die zu Spannungen im Behälterboden führen können.

Indem in einer Ausführungsvariante der Standmanschette diese aus einer orientierten Polymerzusammensetzung besteht, ist die Standmanschette im Streckblasverfahren mit einer sehr grossen Eigensteifigkeit, Schlagzähigkeit und hoher mechanischer Festigkeit herstellbar.

Die Polymerzusammensetzung für die Herstellung der Standmanschette umfasst Polymere deren Hauptkomponente, also mehr als 70 Gewichtsprozent, aus wenigstens einem Material aus der Gruppe bestehend aus Polyolefinen, inbesondere Polypropylen (PP), High Density Polyethylen (HDPE), Low Density Polyethylen (LDPE), aus Polyestern, insbesondere Polyethylenterephthalat (PET), Polyethylenfuranoat (PEF), Polypropylenfuranoat (PPF), Polylactide (PLA), aus Styrolpolymere, insbesondere Styrol-Acrylnitril (SAN), General Purpose Polystyrene (GPS) High Impact Polystyrene (HIPS) , , aus deren Copolymere und aus Gemischen der genannten Polymere besteht. Die angeführten orientierten Polymere erlauben es, die gewünschten Eigenschaften der Standmanschette einzustellen. Sie sind im Spritzgiessverfahren zur Herstellung von Preforms und im Streckblasverfahren gut verarbeitbar, und erlauben eine kostengünstige Herstellung der Standmanschette mit den gewünschten hohen mechanischen Festigkeiten. Durch Zumischen von Farben können die Standmanschetten farbig transparent, farbig transluzent oder auch farbig opak ausgeführt werden.

Eine weitere Ausführungsvariante der Standmanschette kann vorsehen, dass diese wenigstens bereichsweise transparent ausgebildet ist. Die transparente Ausbildung kann einen Blick auf den Kunststoffbehälter und seinen Inhalt in Bodennähe erlauben. Dadurch kann beispielsweise die Lage eines Steigröhrchens überprüft werden, um den Kunststoffbehälter möglichst vollständig entleeren zu können oder auch allgemein den Füllstand des Kunststoffbehälters. Auch können in dem transparenten Bereich Markierungen angeordnet werden, wenn beispielsweise für spezielle Anwendungen eine vorbestimmte Teilmenge dem Kunststoffbehälter entnommen werden soll.

Ein Aerosolgebinde gemäss der Erfindung weist einen innendruckbeständigen Kunststoffbehälter, insbesondere einen Kunststoff-Aerosolbehälter, mit einem konvex nach aussen vorspringenden kuppelförmigen Behälterboden und eine erfindungsgemäss ausgebildete Standmanschette auf. Der Kunststoff-Aerosolbehälter kann ein Spritzgiessteil sein oder in einem Blasformprozess, beispielsweise in einem Streckblasverfahren oder in einem Extrusionsblasverfahren hergestellt sein. Die Standmanschette ist in Bodennähe des Kunststoff-Aerosolbehälters kraftschlüssig mit einer Aussenwandung des Kunststoff-Aerosolbehälters verbunden. Wie bereits im Vorstehenden erwähnt ist, kann die Standmanschette infolge der rein kraftschlüssigen Verbindung mit dem Kunststoff-Aerosolbehälter auf komplex ausgebildete Eingreiforgane oder dergleichen verzichten. Dazu kommt, dass auch der Kunststoff-Aerosolbehälter ohne korrespondierende Vertiefungen, Nuten oder dergleichen hergestellt sein kann. Die erleichtert und verbilligt die Herstellung sowohl der Standmanschette als auch des Kunststoff-Aerosolbehälters. Die rein kraftschlüssige Verbindung zwischen der Standmanschette und dem Kunststoff Aerosolbehälter erleichtert auch den Montagevorgang, indem auf eine exakte Ausrichtung der beiden Bauteile zueinander verzichtet werden kann. Die kraftschlüssige Verbindung kann klebstofffrei sein, was ein Recycling des entleerten Aerosolgebindes erleichtern kann. Hier können die Standmanschette und der Kunststoffbehälter voneinander getrennt werden und jedes Bauteil dem für ihn geeigneten Recyclingstrom zugeführt werden. Darüber hinaus können die Standmanschette und der Kunststoff-Aerosolbehälter die gleiche Kunststoff-Hauptkomponente aufweisen oder vollständig aus dem gleichen Kunststoff gefertigt sein. Hierdurch wird das Recycling nochmals stark vereinfacht, da die Standmanschette und der Kunststoffbehälter dem gleichen Recyclingstrom zuführbar sein können.

In einer Ausführungsvariante des Aerosolgebindes weist der Mantel der Standmanschette wenigstens in einem vom Bodenteil abgewandten Endabschnitt einen Innendurchmesser auf, der kleiner ist als ein Aussendurchmesser des Kunststoff-Aerosolbehälters in einem für die kraftschlüssige Verbindung vorgesehenen bodennahen Bereich. Infolge des Durchmesserunterschieds ist eine einfache Montage der Standmanschette am Kunststoff-Aerosolbehälter ermöglicht, ohne dass dazu das eine oder das andere Bauteil gesondert thermisch behandelt werden müsste. Durch das Befüllen des Innendruckbeständigen Kunsttsoffbehälters mit einem druckbeaufschlagendem Medium wie Treibmittel für Aerosolanwendungen erfolgt in dr Regel ein radiales und axiales Ausdehnen des Kunststoffbehälters. Durch das Ausdehnen kann der Kraftschluss zwischen der Standmanschette und dem Kunststoffbehälter vergrößert werden. Durch eine entsprechende Gestaltung der Dehnungsfalte, respektive Dehnungsfalten, in der Standmaschette kann erreicht werden, dass bei einem maximalen Druck innerhalb des Kunststoffbehälters die Dehnungsfalten nahezu gestreckt sind und damit die Innenflächen der Dehnfalten im Wesentlichen an der Aussenwandung des Kunststoffbehälters anliegen. Auch können die Dehnungsfalten derart gestaltet sein, dass die Standmanschette in Umfangsrichtung im Wesentlichen unabhängig von der radialen Ausdehnung des Kunststoffbehälters und damit unabhängig von dem in dem Kunststoffbehälter herrschenden Druck auf den Behälterboden im Wesentlichen die gleiche Flächenpressung erzeugt.

Indem der Innendurchmesser des Endabschnitts der Standmanschette 0,2 mm bis 6 mm kleiner ist als der Aussendurchmesser des Kunststoff-Aerosolbehälters im bodennahen Bereich in drucklosem Zustand und bei 20°C, kann unter Berücksichtigung der Elastizität des Kunststoffmaterials der Standmanschette eine ausreichend hoher Kraftschluss erzielt werden, der auch fallbeständig sein kann. Beispielsweise kann der Kraftschluss zwischen den beiden Bauteilen durch einen genormten Falltest überprüft werden, bei dem der befüllte Kuststoffbehälter mit der montierten Standmanschette auf -18°C abgekühlt wird und aus 2m Höhe auf eine harte Unterlage, insbesondere Steinplatte, ungebremst auftrifft. Hierbei darf unter keinem Aufprallwinkel auf die harte Unterlage die Standmanschette brechen. Durch die Fertigung der Standmanschette im Streckblasprozess kann die Wandstärke sehr dünn ausgeformt werden. Typischerweise ist die Wandstärke der Standmanschette zwischen 0.1 mm bis etwa 0.7mm. Bei einem Aufprall kann sich die Wand der Standmanschette elastisch und/oder plastisch nach innen deformieren und damit zumindest einen Großteil der Aufprallenergie abbauen. Unterstützt werden kann dieser Abbau durch die im Wesentlichen parallele Ausrichtung der Polymerkette, die durch das Streckblasen erreicht wird. Ein dickwandiges Spritzteil mit ungeordneten Polymerketten kann die Aufprallenergie durch Deformation nicht abbauen. Vielmehr wird die Aufprallenergie nahezu ungebremst an den Kunststoffbehälter weitergegeben. Eine Schutzfunktion für den Kunststoffbehälter wird durch eine gespritzte Standmanschette im Wesentlichen nicht erreicht.

Bei einer weiteren Variante des Aerosolgebindes kann eine Aussenwandung im Bereich des kuppelförmigen Behälterbodens von der Abstützfläche, die vom Bodenteil der Standmanschette abragt, abgestützt sein. Die Abstützfläche kann bei der Montage der Standmanschette am Kunststoffbehälter als eine Montagehilfe dienen. Durch die nach innen ragende Abstützfläche kann bei der Montage der Standmanschette auch die Aufschublänge auf den Kunststoffbehälter vorbestimmt und dadurch der Kraftschluss begrenzt werden.

Bei einer weiteren Ausführungsvariante des Aerosolgebindes können die durch die Abstützfläche abgestützte Aussenwandung des kuppelförmigen Behälterbodens und Abstützfläche im Abstützbereich der Standmanschette im Wesentlichen die gleiche Krümmung aufweisen. Dadurch kann der Behälterboden möglichst gleichmässig abgestützt und können lokale Druckbelastungspitzen des Behälterbodens vermieden werden.

Bei einer anderen Ausführungsvariante des Aerosolgebindes weist der abgestützte Behälterboden an seinem am weitesten vorspringenden Bereich einen Abstand von einer ebenen Standfläche auf, der ungefähr 1,5 mm bis ungefähr 5 mm, vorzugsweise ungefähr 1,8 mm bis ungefähr 2,6 mm ist. Infolge des Abstands des Behälterbodens von der Standfläche kann ein Kontakt des Behälterbodens mit basischen Flüssigkeiten, beispielsweise mit Seifenlauge, wie sie beispielsweise auf Oberflächen von Waschtischen in Badezimmern anzutreffen sein kann, vermieden werden. Dies ist insbesondere bei Standmanschetten von Bedeutung, die in einem zentrischen Bereich des Botenteils mit einem Durchbruch versehen sind. Basische Flüssigkeiten können bei Kontakt mit verschiedenen Kunststoffmaterialien insbesondere im Bodenbereich zu Spannungen im Kunststoffmaterial führen. Gerade bei Kunststoff-Aerosolbehältern, die einen relativ hohen Innendruck aufweisen können, kann ein derartiger Kontakt dadurch vermieden werden. Auch unterstützt der Abstand des Behälterbodens, respektive der Abstand des Zentrums des Abstützbereichs der Standmanschette von der Standfläche der Standmanschette auch ein Stehen auf unebenen Boden, da die Standfläche nicht um einen auf einem Untergrund aufstehenden Abstützbereich kippelt. Es versteht sich, dass die Standfläche der Standmanschette in Teilflächen unterteilt sein kann, um ein wackelfreies Stehen auch auf einem unebenen Untergrund zu ermöglichen. Die Standfläche kann in zwei, drei, vier oder auch fünf Teilbereiche gegliedert sein, die voneinander durch Rücksprünge getrennt sind.

Weitere Vorteile und Merkmale der Erfindung ergeben sich aus der nachfolgenden Beschreibung von Ausführungsbeispielen unter Bezugnahme auf die schematischen, nicht massstabsgetreuen Abbildungen.
- Fig. 1: zeigt eine perspektivische Ansicht eines vorgeschlagenen Aerosolgebindes mit einem transparent dargestellten Kunststoffbehälter;
- Fig. 2: zeigt eine axial geschnittene Darstellung des Aerosolgebindes gemäss Fig. 1;
- Fig. 3: zeigt eine vergrösserte axial geschnittene Darstellung eines bodennahen Abschnitts des Aerosolgebindes;
- Fig. 4: zeigt eine perspektivische Darstellung einer Standmanschette; und
- Fig. 5: und Fig. 6 zeigen zwei schematische Darstellungen zur Erläuterung des Herstellverfahrens der Standmanschette im Lost-Neck-Verfahren.

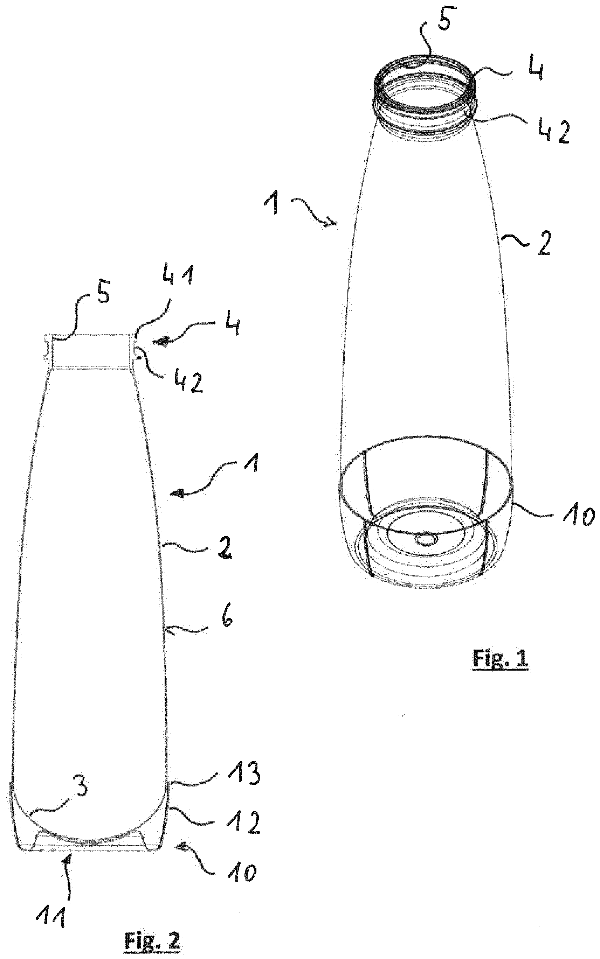

Ein in Fig. 1 und Fig. 2 dargestelltes Aerosolgebinde 1 weist einen innendruckbeständigen Kunststoffbehälter 2, insbesondere einen Kunststoff-Aerosolbehälter, mit einem konvex nach aussen vorspringenden kuppelförmigen Behälterboden 3, wie dies insbesondere in Fig. 2 ersichtlich ist, und eine Standmanschette 10 auf. Der Kunststoff-Aerosolbehälter 2 kann ein Spritzgiessteil sein oder in einem Blasformprozess, beispielsweise in einem Streckblasverfahren oder in einem Extrusionsblasverfahren hergestellt sein. Der Kunststoff-Aerosolbehälter kann ein- oder mehrlagig ausgebildet sein und zu wenigstens 80 % w/w aus einer Kunststoff-Hauptkomponente aus der Gruppe bestehend aus Polyethylenterephthalat, Polyethylennaphthalat, Polyethylenfuranoat, Polylactid, deren Copolymere und Gemischen der genannten Kunststoffe bestehen. Der Kunststoff-Hauptkomponente können bis zu 20 Gewichtsprozent (% w/w) Fremdstoffe zugemischt sein. Beispielsweise können der Kunststoff-Hauptkomponente Copolymere, Farbstoffe, UV-Blocker, Stabilisierungszusätze wie z.B. Glasfasern oder Glaskugeln oder Mischungen daraus, Additive oder Fremdpolymere zugemischt werden. Die Kunststoff-Hauptkomponente kann auch noch weitere Kunststoffe aus der Gruppe bestehend aus PEN, PEF, PLA, Polyester, Polyamid, Polybutylenterephthalat, Polycarbonat, Polyolefine, Silicone, deren Copolymere und Mischungen der genannten Kunststoffe aufweisen.

Der Kunststoff-Aerosolbehälter 2 besitzt einen Behälterhals 4 mit einer Öffnung 5. Der Behälterhals 4 weist gemäss dem dargestellten Ausführungsbeispiel einen die Öffnung 5 berandenden Kragen 41 mit einer unterhalb des Kragens 41 angeordneten ringförmig umlaufenden Nut 42 auf. Der Kragen 41 mit der ringförmig umlaufenden Nut 42 kann eine Montage einer nicht dargestellten Abgabevorrichtung, beispielsweise einer Ventileinheit, für ein im Kunststoff-Aerosolbehälter 2 unter Druck gelagertes Aerosol erleichtern.

Der Kunststoff-Aerosolbehälter 2 ist mit seinem bodennahen Bereich in der Standmanschette 10 gelagert, die, wie insbesondere in Fig. 2 ersichtlich ist, ein Bodenteil 11 und einen einstückig damit ausgebildeten Mantel 12 aufweist. Die Standmanschette 10 ist wenigstens mit ihren vom Bodenteil 11 abgewandten Endbereich 13 in einem bodennahen Bereich des Kunststoff-Aerosolbehälters 2 kraftschlüssig mit einer Aussenwandung 6 des Kunststoff-Aerosolbehälters 2 verbunden. Die Standmanschette 10 kann ein- oder mehrschichtig ausgebildet sein und ist in einem Streckblasverfahren aus einer orientierten Polymerzusammensetzung hergestellt. Die Polymerzusammensetzung für die Herstellung der Standmanschette umfasst Polymere, deren Hauptkomponente, also mehr als 70 Gewichtsprozent, aus wenigstens einem Material aus der Gruppe bestehend aus Polyolefinen insbesondere Polypropylen (PP), High Density Polyethylen (HDPE), Low Density Polyethylen (LDPE), aus Polyestern, insbesondere Polyethylenterephthalat (PET), Polyethylenfuranoat (PEF), Polypropylenfuranoat (PPF), Polylactide (PLA), aus Styrolpolymere, insbesondere Styrol-Acrylnitril (SAN), General Purpose Polystyrene (GPS) High Impact Polystyrene (HIPS), aus deren Copolymere und aus Gemischen der genannten Polymere besteht

Der Kunststoff-Aerosolbehälter 2 und/oder die Standmanschette 10 können transparent, transluzent oder opak ausgebildet sein. Sie können die gleichen oder voneinander verschiedenen Farben aufweisen. Die Standmanschette 10 kund/oder der Kunststoff-Aerosolbehälter 2 kann ferner nur bereichsweise transparent ausgebildet sein.

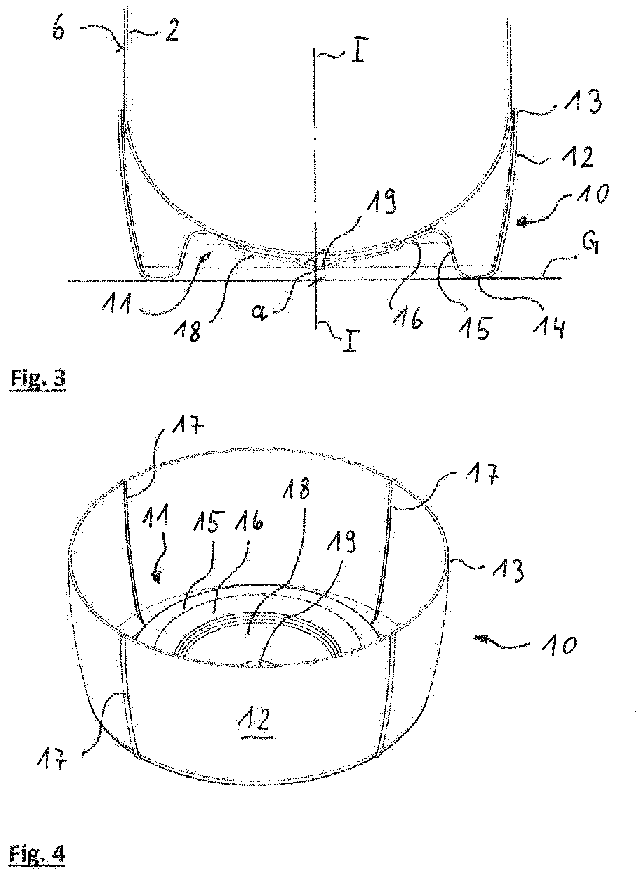

Die Schnittdarstellung in Fig. 3 zeigt den bodennahen Bereich des Kunststoff-Aerosolbehälters 2, der in der Standmanschette 10 aufgenommen ist, in einem vergrösserten Massstab. Das Bodenteil der Standmanschette 10 ist wiederum mit dem Bezugszeichen 11 versehen; der Mantel trägt wiederum das Bezugszeichen 12. Der vom Bodenteil 11 abgewandten Endbereich 13 des Mantels 12 ist kraftschlüssig mit der Aussenwandung 6 des Kunststoff-Aerosolbehälters 2 verbunden. Fig. 3 zeigt weiters, dass das Bodenteil 11 der Standmanschette 10 einen Abstützbereich 15 aufweist, der sich von einer Standfläche 14 des Bodenteils 11 S-förmig in Richtung der axialen Erstreckung des Mantels 12 nach innen erstreckt. Dort ist im Abstützbereich 15 eine konzentrisch angeordnete konvexe Abstützfläche 16 ausgebildet. Im montierten Zustand liegt die Aussenwandung 6 des Behälterbodens 3 des Kunststoff-Aerosolbehälters 2 auf der Abstützfläche 16 auf und unterstützt so den Behälterboden 3. Bei der Montage der Standmanschette 10 am Kunststoff-Aerosolbehälter 2 begrenzt die Abstützfläche 16 den Einschubweg und kann dadurch die Grösse des Kraftschlusses begrenzen. Die Abstützfläche 16 ist konzentrisch um eine Mittelachse I-I der Standmanschette 10 angeordnet und kann aus mehreren Teilbereichen bestehen. An die Abstützfläche 16 schließt sich eine Mulde 18 an, die gegenüber einer Kontur des Behälterbodens 3 zurückgenommen ist, so dass im montierten Zustand der Behälterboden 3, respektive die Aussenwandung 6, nur an der Abstützfläche 16 aufliegt. Die Mulde 18 kann einen Rücksprung 19 haben, um die Mulde 18 gerade im Zentrum des Behälterbodens 3, der einen gegenüber einer Kontur des Behälterbodens 3 überragenden Anspritzpunkt haben kann, nochmals zurückzunehmen. Die Aussenwandung 6 des kuppelförmigen Behälterbodens 3 und die konzentrische konvexe Abstützfläche 16 im Abstützbereich 15 der Standmanschette 10 können im Wesentlichen die gleiche Krümmung aufweisen. Dadurch kann der Behälterboden 3 möglichst gleichmässig abgestützt werden.

In einer nicht dargestellten weiteren Ausführungsvariante der Standmanschette kann das Bodenteil auch einen etwa mittig angeordneten Durchbruch aufweisen. Dieser Durchbruch kann dazu dienen, dass beispielsweise Flüssigkeit oder Fremdkörper, die in die Standmanschette gelangen, wieder aus dieser austreten können. Beispielsweise kann Flüssigkeit aus dem Kunststoff-Aerosolbehälter an dessen Aussenwandung herablaufen und in die Standmanschette gelangen. Die Aussparung kann ein Abfliessen der Flüssigkeit ermöglichen. In der Regel ist die Standmanschette frei von Durchbrüchen und/oder Öffnungen.

Der in der Standmanschette 10 abgestützte Behälterboden 3 weist an seinem am weitesten vorspringenden Bereich einen Abstand a von einer ebenen Standfläche G auf, der 1,5 mm bis 5 mm, vorzugsweise um 1,8 mm bis 2,6 mm beträgt.

Der Mantel 12 der Standmanschette 10 kann an seinem vom Bodenteil 11 abgewandten Endbereich 13 eine im wesentlichen zylindrische axiale Erstreckung aufweisen. Zum Bodenteil 11 hin kann der Mantel 12 die Form einer Schüssel oder eines Kegelabschnitts je mit abnehmendem Aussendurchmesser aufweisen. In einer nicht dargestellten alternativen Ausführungsvariante kann der Mantel der Standmanschette vom Endbereich bis zum Bodenteil auch einen durchgehend zylindrischen Verlauf mit konstantem Aussendurchmesser aufweisen.

Fig. 4 zeigt eine perspektivische Ansicht der Standmanschette 10 gemäss Fig. 3 mit Blick in deren Inneres. Der schüsselartige Mantel trägt das Bezugszeichen 12. Das Bodenteil ist wiederum mit dem Bezugszeichen 11 versehen. Vom Bodenteil 11 ragt der Abstützbereich 15 mit der konkav gestalteten Abstützfläche 16 ins Innere der Standmanschette 10. Der Mantel 12 der Standmanschette 10 weist eine vorbestimmte Anzahl, im vorliegenden Ausführungsbeispiel vier, Dehnungsfalten 17 auf, die sich im wesentlichen in eine axiale Richtung erstrecken und im gleichen Winkelabstand voneinander angeordnet sind. Durch die Dehnungsfalten 17 kann sich der Mantel 12 der Standmanschette 10 bei ihrer Montage sehr gut an die Aussenabmessungen des Kunststoff-Aerosolbehälters im Montagebereich anpassen. Die Dehnungsfalten 17 ermöglichen es auch, dass der Mantel 12 der Standmanschette 10 einer allfälligen Ausdehnung des Kunststoff-Aerosolbehälters infolge des Innendrucks folgen kann, um einen übermässigen Druck auf die Aussenwandung des Kunststoffbehälters im Montagebereich zu verhindern. Die Dehnungsfalten können derart ausgebildet sein, dass sie im gedehnten Zustand praktisch nicht sichtbar sind. Im vorliegenden Ausführungsbeispiel erstrecken sich die Dehnungsfalten über die gesamte Höhe des Mantels 12. In einem weiteren nicht dargestellten Ausführungsbeispiel erstrecken sich die Dehnungsfalten 17 lediglich über die Höhe, in der der Behälterboden kraftschlüssig umspannt ist.

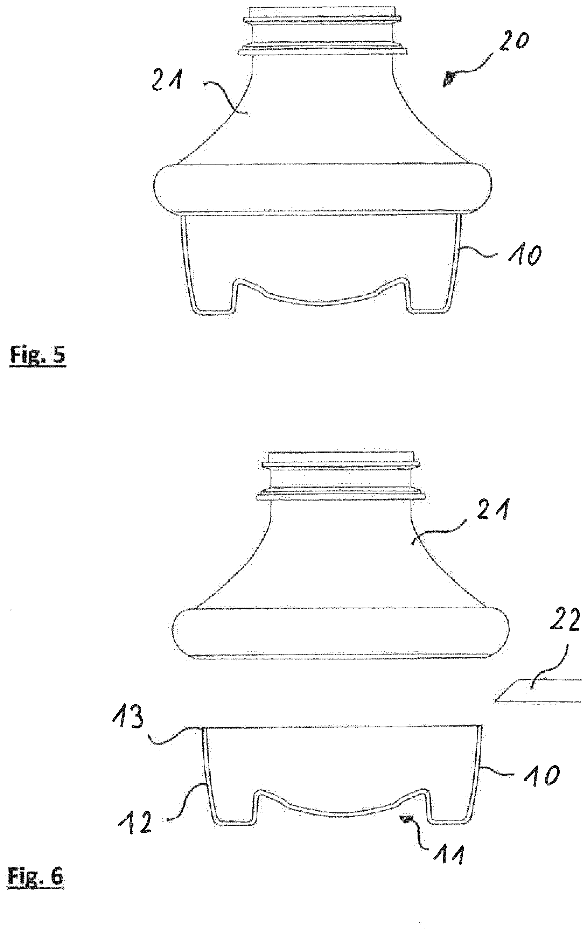

Die Abbildungen Fig. 5 und Fig. 6 dienen zur Erläuterung der Herstellung der Standmanschette 10. Dabei zeigt Fig. 5 einen Zwischenbehälter 20, der in einem Streckblasverfahren aus einem üblicherweise in einem Spritzgiessverfahren gefertigten Preform hergestellt ist. Zum Einsatz können dabei insbesondere Preforms kommen, die bezogen auf ihren Durchmesser relativ kurz ausgebildet sind. Beispielsweise besitzen derartige Preforms eine Gesamtlänge von 15mm bis 150 mm. Die Herstellung der Standmanschette 10 erfolgt insbesondere in einem sogenannten "Lost-Neck-Verfahren". Bei diesem Verfahren wird ein überschüssiger Teil des Zwischenbehälters 20, der auch als Dom 21 bezeichnet wird, mit einem Schneid- bzw. Stanzwerkzeug 22 abgetrennt, wie dies in Figur 6 verdeutlicht ist. Der abgetrennte Dom 21 kann rezykliert werden. Der verbleibende Abschnitt des Zwischenbehälters bildet die Standmanschette 10. Die Herstellung der Standmanschette 10 Lost-Neck-Verfahren bietet die Möglichkeit, die für die Montage der Standmanschette 10 wesentlichen Abschnitte des Mantels 12, insbesondere den vom Bodenteil 11 abgewandten Endabschnitt 13 des Mantels 12 zu kalibrieren, um die für die Montage erforderliche Masshaltigkeit zu gewährleisten. Auch kann der Schnitt in einem vorbestimmten Winkel zur Mittelachse erfolgen, so dass der Endbereich 13 des Mantels 12 eine Einführschräge besitzt, die ein Einführen des Kunststoff-Aerosolbehälters in die Manschette 10 erleichtert. Die vorstehende Beschreibung dient nur zur Erläuterung des erfindungsgemässen Verfahrens und ist nicht als einschränkend zu betrachten. Vielmehr wird die Erfindung durch die Patentansprüche definiert.

## Patentansprüche

1. Standmanschette (10) für einen innendruckbeständigen Kunststoffbehälter (2), insbesondere für einen Kunststoff-Aerosolbehälter, die ein eine Standfläche (14) aufweisendes Bodenteil (11) und einen in Umfangsrichtung geschlossenen Mantel (12) aufweist, wobei das Bodenteil (11) und der Mantel (12) einstückig miteinander ausgebildet sind, und dass der Mantel (12) für eine kraftschlüssige Verbindung ausgebildet ist, wobei das Bodenteil (11) und der Mantel (12) in einem Streckblasverfahren hergestellt sind und dass der Mantel (12) für die kraftschlüssige Verbindung mit einer Aussenwandung (6) in Bodennähe eines innendruckbeständigen Kunststoffbehälters (2) ausgebildet ist, **dadurch gekennzeichnet, dass** der Mantel (12) wenigstens eine Dehnungsfalte (17) aufweist, die sich im wesentlichen in eine axiale Richtung erstreckt.

2. Standmanschette (10) nach Anspruch 1, **dadurch gekennzeichnet, dass** sie in einem Lost-Neck-Verfahren hergestellt ist.

3. Standmanschette (10) nach Anspruch 1, **dadurch gekennzeichnet, dass** der Mantel (12) zwei oder mehrere Dehnungsfalten (17) aufweist, die in gleichem Winkelabstand voneinander angeordnet sind.

4. Standmanschette (10) nach einem der vorangehenden Ansprüche, **dadurch gekennzeichnet, dass** das Bodenteil (11) einen Abstützbereich (15) aufweist, der sich von der Standfläche (14) nach innen erstreckt und wenigstens eine konzentrisch angeordnete Abstützfläche (16) zur Unterstützung eines Behälterbodens in montiertem Zustand aufweist.

5. Standmanschette (10) nach einem der vorangehenden Ansprüche, **dadurch gekennzeichnet, dass** das Bodenteil (11) einen etwa mittig angeordneten Rücksprung (19) aufweist.

6. Standmanschette (10) nach einem der vorangehenden Ansprüche, **dadurch gekennzeichnet, dass** sie aus einer orientierten Polymerzusammensetzung besteht.

7. Standmanschette (10) nach Anspruch 6, **dadurch gekennzeichnet, dass** sie aus Polymeren besteht, deren Hauptkomponente, also mehr als 70 Gewichtsprozent, aus wenigstens einem Material aus der Gruppe bestehend aus Polyolefinen insbesondere Polypropylen (PP), High Density Olyethylen (HDPE), Low Density Polyethylen (LDPE), aus Polyestern, insbesondere Polyethylenterephthalat (PET), Polyethylenfuranoat (PEF), Polypropylenfuranoat (PPF), Polylactide (PLA), aus Styrolpolymere, insbesondere Styrol-Acrylnitril (SAN), General Purpose Polystyrene (GPS) High Impact Polystyrene (HIPS), aus deren Copolymere und aus Gemischen der genannten Polymere besteht.

8. Standmanschette (10) nach einem der vorangehenden Ansprüche, **dadurch gekennzeichnet, dass** sie wenigstens bereichsweise transparent ausgebildet ist.

9. Aerosolgebinde umfassend einen innendruckbeständigen Kunststoffbehälter (2), insbesondere einen Kunststoff-Aerosolbehälter, mit einem konvex nach aussen vorspringenden kuppelförmigen Behälterboden (3) und eine Standmanschette (10) gemäss einem der vorangehenden Ansprüche, **dadurch gekennzeichnet, dass** die Standmanschette (10) in Bodennähe des Kunststoffbehälters (2) kraftschlüssig mit einer Aussenwandung (6) des Kunststoffbehälters (2) verbunden ist.

10. Aerosolgebinde nach Anspruch 9, **dadurch gekennzeichnet, dass** der Mantel (12) der Standmanschette (10) wenigstens in einem vom Bodenteil (11) abgewandten Endabschnitt (13) einen Innendurchmesser aufweist, der kleiner ist als ein Aussendurchmesser des Kunststoff-Aerosolbehälters (2) in einem für die kraftschlüssige Verbindung vorgesehenen bodennahen Bereich.

11. Aerosolgebinde nach Anspruch 10, **dadurch gekennzeichnet, dass** der Innendurchmesser des Endabschnitts (13) der Standmanschette (10) 0.2 mm bis 6 mm kleiner ist als der Aussendurchmesser des Kunststoff-Aerosolbehälters (2) im bodennahen Bereich bei drucklosem Zustand und bei 20°C.

12. Aerosolgebinde nach einem der Ansprüche 9 bis 11 umfassend eine Standmanschette gemäss Anspruch 4, **dadurch gekennzeichnet, dass** die Aussenwandung (6) im Bereich des kuppelförmigen Behälterbodens (3) von der Abstützfläche (16) abgestützt ist.

13. Aerosolgebinde nach Anspruch 12, **dadurch gekennzeichnet, dass** die durch die Abstützfläche (16) abgestützte Aussenwandung (6) und die Abstützfläche (16) im Wesentlichen die gleiche Krümmung aufweisen.

14. Aerosolgebinde nach Anspruch 12 oder 13, **dadurch gekennzeichnet, dass** der abgestützte Behälterboden (3) an seinem am weitesten vorspringenden Bereich einen Abstand (a) von einer ebenen Standfläche (G) aufweist, der ungefähr 1,5 mm bis ungefähr 5 mm, vorzugsweise ungefähr 1,8 mm bis ungefähr 2,6 mm ist.

## Claims

1. Stand sleeve (10) for an inner-pressure-resistant plastic container (2), in particular for a plastic aerosol container, said stand sleeve comprising a base part (11) which comprises a stand surface (14), and a jacket (12) which is closed in the peripheral direction, wherein the jacket (12) is designed for a non-positive connection, wherein the base part (11) and the jacket (12) are designed as one piece with one another and are manufactured in a stretch blow moulding method, and that the jacket (12) is designed for the non-positive connection to the outer wall (6) in the proximity of the base of an inner-pressure-resistant plastic container (2), **characterized in that** the jacket (12) comprises at least one stretch fold (17) which extends essentially in an axial direction.

2. Stand sleeve (10) according to claim 1, **characterized in that** it is manufactured in a lost-neck method.

3. Stand sleeve (10) according to claim 1, **characterized in that** the jacket (12) comprises two or more stretch folds (17) which are arranged at the same angular distance to one another.

4. Stand sleeve (10) according to one of the preceding claims, **characterized in that** the base part (11) comprises a support region (15) which extends inwards from the stand surface (14) and which comprises at least one concentrically arranged support surface (16) for supporting a container base in the assembled state.

5. Stand sleeve (10) according to one of the preceding claims, **characterized in that** the base part (11) comprises a roughly centrally arranged recess (19).

6. Stand sleeve (10) according to one of the preceding claims, **characterized in that** it consists of an orientated polymer composition.

7. Stand sleeve (10) according to claim 6, **characterized in that** it consist of polymers whose main component, thus more than 70% by weight, consists of at least one material from the group consisting of polyolefins, in particular polypropylene (PP), high density polyethylene (HDPE), low density polyethylene (LDPE), of polyesters, in particular polyethylene terephthalate (PET), polyethylene furanoate (PEF), polypropylene furanoate (PPF), polylactides (PLA), of styrene polymers, in particular styrene acrylic nitrile (SAN), general purpose polystyrene (GPS), high impact polystyrene (HIPS), of their copolymers and of mixtures of the mentioned polymers.

8. Stand sleeve (10) according to one of the preceding claims, **characterized in that** it is designed transparently at least in regions.

9. Aerosol container comprising an inner-pressure-resistant plastic container (2), in particular a plastic aerosol container, with a convexly outwardly projecting dome-shaped container base (3), and a stand sleeve (10) according to one of the preceding claims, **characterized in that** the stand sleeve (10) is non-positively connected to an outer wall (6) of the plastic container (2) in the proximity of the base of the plastic container (2).

10. Aerosol container according to claim 9, **characterized in that** the jacket (12) of the stand sleeve (10) at least in an end section (13) which is away from the base part (11) has an inner diameter which is smaller than an outer diameter of the plastic aerosol container (2) in a region which is close to the base and which is envisaged for the non-positive connection.

11. Aerosol container according to claim 10, **characterized in that** the inner diameter of the end section (13) of the stand sleeve (10) is 0.2 mm to 6 mm smaller than the outer diameter of the plastic aerosol container (2) in the region which is close to the base, given a pressure-less state and at 20□C.

12. An aerosol container according to one of the claims 9 to 11, comprising a stand sleeve according to claim 4, **characterized in that** the outer wall (6) is supported by the support surface (16) in the region of the dome-shaped container base (3).

13. Aerosol container according to claim 12, **characterized in that** the outer wall (6) which is supported by the support surface (16) and the support surface (16) essentially have the same curvature.

14. Aerosol container according to claim 12 or 13, **characterized in that** the supported container base (3) at its region which projects the furthest has a distance (a) to a level stand surface (G) which is roughly 1.5 mm to roughly 5 mm, preferably roughly 1.8 mm to roughly 2.6 mm.

## Revendications

1. Manchon d'appui (10) destiné à un récipient en matière plastique (2) résistant à la pression interne, notamment à un récipient aérosol en matière plastique, manchon qui présente une partie de fond (11), dotée d'une surface d'appui (14), et une enveloppe (12) fermée dans la direction périphérique, sachant que la partie de fond (11) et l'enveloppe (12) sont réalisées d'une seule pièce l'une avec l'autre, et que l'enveloppe (12) est conçue pour une liaison par adhérence, sachant que la partie de fond (11) et l'enveloppe (12) sont réalisées selon un procédé d'étirage-soufflage et que l'enveloppe (12) est réalisée à proximité du fond d'un récipient en matière plastique (2) résistant à la pression interne, en vue de la liaison par adhérence avec une paroi externe (6), **caractérisé en ce que** l'enveloppe (12) présente au moins un pli d'expansion (17) qui s'étend sensiblement dans une direction axiale.

2. Manchon d'appui (10) selon la revendication 1, **caractérisé en ce qu'**il est fabriqué selon un procédé à col perdu.

3. Manchon d'appui (10) selon la revendication 1, **caractérisé en ce que** l'enveloppe (12) présente deux ou plusieurs plis d'expansion (17) qui sont disposés à égales distances angulaires les uns des autres.

4. Manchon d'appui (10) selon l'une des revendications précédentes, **caractérisé en ce que** la partie de fond (11) présente une zone de support (15) qui s'étend vers l'intérieur depuis la surface d'appui (14) et présente au moins une surface de support (16) disposée de manière concentrique et destinée à soutenir un fond de récipient, à l'état assemblé.

5. Manchon d'appui (10) selon l'une des revendications précédentes, **caractérisé en ce que** la partie de fond (11) présente un renfoncement (19) disposé à peu près au centre.

6. Manchon d'appui (10) selon l'une des revendications précédentes, **caractérisé en ce qu'**il est constitué d'un composé polymère orienté.

7. Manchon d'appui (10) selon la revendication 6, **caractérisé en ce qu'**il est constitué de polymères dont le constituant principal, à savoir plus de 70 pour cent en poids, est formé d'au moins un matériau appartenant au groupe comprenant des polyoléfines, notamment du polypropylène (PP), High Density Olyethylen (HDPE), Low Density Polyethylen (LDPE), des polyesters, notamment du polyéthylène téréphtalate (PET), polyéthylène furanoate (PEF), polypropylène furanoate (PPF), des polylactides (PLA), des polymères styréniques, notamment styrène-acrylonitrile (SAN), General Purpose Polystyrene (GPS), High Impact Polystyrene (HIPS), leurs copolymères et des mélanges des polymères cités.

8. Manchon d'appui (10) selon l'une des revendications précédentes, **caractérisé en ce qu'**il est réalisé de manière transparente au moins par portions.

9. Emballage aérosol comprenant un récipient en matière plastique (2) résistant à la pression interne, notamment un récipient aérosol en matière plastique, doté d'un fond de récipient (3) en forme de dôme faisant saillie de manière convexe vers l'extérieur, et un manchon d'appui (10) selon l'une des revendications précédentes, **caractérisé en ce que**, à proximité du fond du récipient en matière plastique (2), le manchon d'appui (10) est relié par adhérence à une paroi externe (6) du récipient en matière plastique (2).

10. Emballage aérosol selon la revendication 9, **caractérisé en ce que** l'enveloppe (12) du manchon d'appui (10) présente, au moins dans une partie d'extrémité (13) opposée à la partie de fond (11), un diamètre intérieur qui est plus petit qu'un diamètre extérieur du récipient aérosol en matière plastique (2), dans une région proche du fond qui est prévue pour la liaison par adhérence.

11. Emballage aérosol selon la revendication 10, **caractérisé en ce que** le diamètre intérieur de la partie d'extrémité (13) du manchon d'appui (10) est inférieur de 0,2 mm à 6 mm au diamètre extérieur de l'emballage aérosol en matière plastique (2), dans la région proche du fond, à l'état sans pression et à 20 °C.

12. Emballage aérosol selon l'une des revendications 9 à 11, comprenant un manchon d'appui selon la revendication 4, **caractérisé en ce que**, dans la région du fond de récipient (3) en forme de dôme, la paroi externe (6) est soutenue par la surface de support (16).

13. Emballage aérosol selon la revendication 12, **caractérisé en ce que** la paroi extérieure (6), soutenue par la surface de support (16), et la surface de support (16) présentent sensiblement la même courbure.

14. Emballage aérosol selon la revendication 12 ou 13, **caractérisé en ce que**, dans sa partie la plus proéminente, le fond de récipient (3) soutenu présente une distance (a) par rapport à une surface de pose (G) plane, qui est d'environ 1,5 mm à environ 5 mm, de préférence d'environ 1,8 mm à environ 2,6 mm.
